# EUROPÄISCHE PATENTSCHRIFT

(11) **EP 1 517 824 B1**
(45) Veröffentlichungstag und Bekanntmachung des Hinweises auf die Patenterteilung: **03.08.2005**
(21) Anmeldenummer: 03761420.3
(22) Anmeldetag: 20.06.2003
(51) Int. Cl.: B62D 1/00

(54) **RUNGE**
STANCHION
ETANCON

(30) Priorität: 28.06.2002 DE 10228982
(43) Veröffentlichungstag der Anmeldung: 30.03.2005
(73) Patentinhaber: Edscha LKW-Schiebeverdecke GmbH, 42855 Remscheid (DE)
(72) Erfinder: REMMEL, Roger, 42897 Remscheid (DE); KEMMERLING, Karl, 42719 Solingen (DE); REMMEL, Lars, 42897 Remscheid (DE)
(74) Vertreter: Sparing, Rolf Klaus
(86) Internationale Anmeldenummer: PCT/DE2003/002054
(87) Internationale Veröffentlichungsnummer: WO 2004/002803

(56) Entgegenhaltungen:
- WO-A-02/04277
- DE-U- 20 000 002
- DE-U- 20 301 201
- FR-A- 2 802 867

## Beschreibung

Die Erfindung betrifft eine Runge nach dem Oberbegriff des Anspruchs 1.

Rungen werden in der Praxis zum Abstützen von horizontalen Trägem von Planenaufbauten wie zum Beispiel Schiebeverdecken vorgesehen. Ein solcher Planenaufbau kann für Aufbauten von Lastkraftfahrzeugpritschen oder von Sattelaufliegern ausgestaltet sein, aber auch bei Containern oder Eisenbahnwaggons. Bei Schiebeverdecken sind, um diese schnell beladen oder entladen zu können, die von den Trägem herabhängenden Seitenplanen zusammenschiebbar, und auch die zwischen den Längsträgern verlaufende Dachplane kann mittels verfahrbarer Spriegel, an denen die Dachplane festgelegt ist, zusammengeschoben werden. Um den Zugang zum Laderaum weiter zu verbessern, sind die Verdeckgestelle der Schiebeverdecke leicht demontierbar ausgestaltet. Insbesondere die Mittelrungen sollen schnell entfernt werden können, häufig aber auch die Eckrungen, die auch als Pfosten bezeichnet werden, wobei in diesem zweiten Fall auch die Träger abgebaut werden müssen, während diese bei Lösen nur der Mittelrungen bei unbewegtem Schiebeverdeck von den Pfosten ausreichend abgestützt werden. Andere Planenaufbauten stützten ein Chassisdach ab, das zum Beispiel mit geringem Gewicht aus einer auf den Längsträgern vernieteten Kunststofffolie ausgebildet ist, so daß die Verschiebung nur der Seitenplane vorgesehen ist.

Aus der Praxis sind eine Reihe von Rungenanordnungen bekannt, wo jeweils eine Runge an einem entsprechenden Befestigungsglied, das auch als Rungenschuh bezeichnet wird, mittels schnell lösbarem Verschluss verriegelbar sind, wobei der Rungenschuh in der Regel an einem tragenden Aussenteil der Ladefläche des Schiebeverdecks, beispielsweise einem Metallrahmen, der Holzlatten abstützt, festgelegt ist, beispielsweise durch Verschrauben oder durch Verschweissen.

Eine erste aus der Praxis bekannte Ausführungsform einer verriegelbaren Mittelrunge weist eine Hebelanordnung mit einem Zwischenhebel und einem Haupthebel auf, wobei der Zwischenhebel mit einem ersten Gelenk an der Runge und über ein zweites Gelenk an dem Haupthebel angelenkt ist und der Haupthebel an dem langen Hebelarm einen Betätigungsgriff und an dem kurzen Hebelarm eine Ausbildung als Stemmglied aufweist. Zum Verriegeln der Runge wird das Stemmglied hinter eine nach oben vorspringende Nase des Rungenschuhs angesetzt und durch Betätigen des Haupthebels die Runge nach oben von dem Rungenschuh über die beiden Hebel weggedrückt, bis die Hebelanordnung verriegelt wird. Bei dieser Ausführungsform wird die gesamte Last der Runge und des Längsträgers und alle auch während der Fahrt auf die Runge einwirkenden Kräfte über die beiden Gelenke auf den Rungenschuh übertragen, wodurch die Gelenke extrem beansprucht werden und die Runge nur eine begrenzte Standzeit aufweist. Darüber hinaus weist diese Ausführungsform keine Fixierung der Runge in Richtung der Längsträger auf.

Eine zweite aus der Praxis bekannte Ausführungsform einer verriegelbaren Mittelrunge weist einen Steigbügelartigen ersten Hebel auf, der in ein U-Profil eines Rungenlagers eingesetzt wird, und einen zweiten Hebel, der an dem Korpus der Runge angelenkt ist und der über einen Zwischenhebel mit einem in dem Korpus der Runge axial verlagerbaren Riegelkeil gekoppelt ist, wobei das Rungenlager eine Tasche für die Aufnahme des Riegelkeils aufweist. Zunächst wird die unter einem Winkel zum ersten Hebel stehende Runge in Richtung auf das Rungenlager verschwenkt und hierbei angehoben, wobei die Vertrikalkräfte über den ersten Hebel und dessen Anlenkung in die Runge eingeleitet werden. Der Riegelkeil wird dann durch Betätigung des zweiten Hebels in die Tasche des Rungenlagers abgesenkt und hierdurch die labil um das Gelenk mit dem ersten Hebel kippende Runge verriegelt. Der Riegelkeil kann nur bei Versagen des ersten Hebels und seiner dynamisch stark beanspruchten Gelenk an der Runge vertikale Belastungen der Runge in die Fangtasche einleiten, dies aber nur über den zweiten Hebel und seine Anlenkung, der hierzu nicht ausgelegt ist. Ferner stellt der verlagerbare Riegelkeil selbst einen weiteres verschleissanfälliges Teil dar. Die bekannte Rungenanordnung ist jedoch schwierig in der Handhabung, da sie manuell in die angehobene Position verlagert werden muss.

Eine dritte aus der Praxis bekannte Ausführungsform einer verriegelbaren Mittelrunge weist einen an dem Korpus der Runge angelenkten Hebel auf, dessen einer Hebelarm einen Griff aufweist und dessen anderer Hebelarm in ein U-förmiges Rungenlager einführbar ist, wobei die Runge durch Drücken des Hebels mit dem Griff auf den Korpus der Runge angehoben wird. Auch hier werden die vertikalen Kräfte von dem Rungenlager über den Hebel in die Runge eingeleitet.

DE-A-200 00 002 zeigt eine der vorstehend beschriebenen dritten aus der Praxis bekannten entsprechende Runge. Die Runge ist in ihrem unteren Bereich über ein Gelenk mit einem als doppelarmiger Hebel ausgebildeten Schwenkglied verbunden, an dessen einem Ende ein als Rundstab ausgebildeter Endbereich in eine U-förmige Lagerhalbschale eines Befestigungsgliedes eingesetzt wird. Das Schwenkglied leitet die Gewichtskräfte über das Gelenk in die Runge ein. Zum Ein- und Aushängen der Runge ist an dem den Rundstab abgekehrten anderen Ende des Schwenkgliedes mittels einer Achse ein Ende eines oberen Kniehebelgliedes eines Kniehebels verbunden, wobei das andere Ende des oberen Kniehebelglieds über eine weitere Achse mit einem mittleren Bereich eines unteren Kniehebelglieds verbunden ist. Das untere Kniehebelglied ist als doppelarmiger Hebel ausgebildet, dessen unterer Hebelarm über eine Anlenkachse in einem Langloch mit einem Verriegelungskeil verbunden ist. Der Verriegelungskeil ist dazu bestimmt, in eine Keiltasche des Befestigungsgliedes einzudringen, während der obere Hebelarm als Betätigungshebel ausgebildet ist. Der Betätigungshebel wird durch eine Schnappeinrichtung im geschlossenen Zustand gehalten. Der Verriegelungskeil wird durch eine Feder in die Keiltasche gedrückt.

Es ist die Aufgabe der Erfindung, eine Runge nach dem Oberbegriff des Anspruchs 1 zu schaffen, die zuverlässig verriegelbar ist und eine verbesserte Standzeit aufweist.

Diese Aufgabe wird bei der eingangs erwähnten Runge erfindungsgemäß mit den kennzeichnenden Merkmalen des Anspruchs 1 gelöst.

Die erfindungsgemäße Runge schafft damit eine zuverlässigen Kraftfluss von dem Befestigungsglied zu dem Korpus der Runge. Insbesondere wenn das Gegenlager fest an dem Korpus der Runge angeordnet ist werden die vertikalen Kräfte zuverlässig übertragen. Die Standzeit einer solchen Runge ist, weil anfällige gelenkige Teile nicht nach der Verriegelung und insbesondere während der Fahrt beansprucht werden, deutlich verbessert.

Die Übertragung der vertikalen Kräfte von dem Befestigungsglied auf die Runge ist besonders vorteilhaft, wenn die Berührungsebene Befestigungsglied und Stützelement und auch die Berührungsebene Stützelement und Gegenlager horizontal und damit senkrecht zu der Hauptwirkrichtung der übertragenen Kräfte ausgebildet ist oder zumindest horizontale Abschnitte aufweist. Zugleich ermöglicht diese bevorzugte Art der formschlüssigen Anordnung eine einfache Fertigung und eine einfach zu berechnende Auslegung der Teilestärken. Alternativ kann aber auch vorgesehen werden, dass die Begrenzungen des Stützelements, jeweils angepasst an die Kontur der beiden benachbarten Teile, in mehreren Ebenen liegt, z.B. in der Art mit mehreren Abstufungen, um das Einführen zu erleichtern, oder aber mit einer zur Horizontalen geneigten Ebene, z.B. wenn das Stützelement eine Keilform aufweist. Insbesondere kann die untere Begrenzung des Stützelements in ihrer Ausgestaltung an bekannte Rungenschuhe angepasst sein, so dass jederzeit unbrauchbar gewordene Rungen aus dem Stand der Technik ohne Umbau des Befestigungsgliedes durch eine erfindungsgemäße Runge ersetzt werden können oder bestehende Rungen durch Nachrüsten eines Stützelements und/oder eines Gegenlagers erfindungsgemäß ausgeführt werden.

Grundsätzlich kann das Stützelement ein von Runge oder Befestigungsglied ablösbares Teil sein, das beim Entriegeln der Runge separat aufbewahrt wird und beim Verriegeln der Runge zwischen Befestigungsglied und dem mit der Runge fest verbundenen Gegenlager eingesetzt wird. In diesem Fall ist das Stützelement vorzugsweise mit einem eigenen Griff zum Herausziehen ausgestaltet und kann ferner einen Kragenabschnitt aufweisen, mit dem es in Einsetzrichtung einen Endanschlag definiert und bei Bedarf eine Begrenzung für einen schwenkbar an der Runge angeordneten Hebel aufweist. Ferner kann das ablösbare Stützelement noch eine Bohrung aufweisen, die zur Aufnahme eines Sicherungsstiftes vorgesehen ist, der zum Beispiel die Runge horizontal durchsetzt, wobei dann bei entriegelter Runge das ablösbare Stützelement mit diesem Sicherungsstift wieder gehaltert werden könnte. Zweckmässigerweise würde ein solches ablösbares so bemessen sein, dass es auch in Querrichtung die Runge an dem Befestigungsglied festlegt; eine mögliche Ausgestaltung kann in einer das Befestigungsglied umrahmenden und von dem Fussbereich der Runge umrahmten Form gewählt sein.

Ebenso kann das Stützelement an dem Befestigungsglied oder an einem mit dem Befestigungsglied fest verbundenen Teil, beispielsweise der Ladefläche, an der das Befestigungsglied festgelegt ist, z.B. schwenkbar angeordnet sein, so dass beim Entriegeln der Runge das Stützelement nicht verloren geht.

Besonders bevorzugt ist jedoch das Vorsehen des Stützelements an einem Teil der Runge, wobei das Teil oder das Stützelement zweckmässigerweise schwenkbar an der Runge gelagert ist, so dass das Stützelement auch bei entriegelter Runge nicht verlorengeht.

Es ist insbesondere möglich, das Stützelement mehrteilig auszuführen und hierbei verschiedene Anordnungen zu kombinieren, z.B. ein ablösbares erstes Stützelement und ein an der Runge vorgesehenes zweites Stützelement, die gemeinsam die vertikalen Kräfte von der Runge in das Befestigungsglied übertragen.

Die erfindungsgemässe Runge umfasst eine Hebelanordnung, etwa eine Kniehebelanordnung, die vorzugsweise wenigstens einen Hebel an der Runge lagert, mit dem die Runge angehoben werden kann, so dass ein Anheben von Hand nicht erforderlich ist. Eine solche Hebelanordnung kann sowohl einen direkt an den Korpus der Runge gekoppelten Hebel als auch mehrere Hebel umfassen. Zweckmässigerweise wird ein Ende eines der Hebel für das Anheben der Runge gegen das Befestigungsglied abstützbar sein und ein entsprechendes, z.B. als Stemmglied ausgebildetes Ende aufweisen. Da die Gelenke und Lager der Hebel bei der erfindungsgemässen Runge in ihrem verriegelten Zustand nicht mehr oder deutlich weniger beansprucht werden, stellen die Gelenke der Runge nicht mehr das kritische Bauteil der Runge dar. Es ist vorzugsweise vorgesehen, dass die Hebelanordnung nur zum Anheben bzw. langsamen Absenken der mit dem Befestigungsglied in Eingriff steht und hiernach jeweils ausgehängt werden kann.

Eine besonders vorteilhafte Weiterbildung der erfindungsgemässen Runge, die mit einer Hebelanordnung versehen ist, besteht im Anordnen des Stützelements an einem der Hebel der Hebelanordnung. So wird vorteilhaft die Betätigung der Hebelanordnung zur Verriegeln mit dem Einsetzen bzw. zum Entriegeln mit dem Herausnehmen des Stützelements kombiniert, ohne dass hierzu zusätzliche Handhabungen erforderlich werden. Sobald das Stützelement herausgezogen ist - was regelmässig nur bei stehendem Fahrzeug vorkommt -, übernimmt die Hebelanordnung die Last der Runge, bis diese abgesenkt ist. Umgekehrt wird die Hebelanordnung mit dem Verriegeln zugleich entlastet. Das Stützelement kann hierbei sowohl von der äusseren Seite als auch von der inneren Seite der Runge eingesetzt werden.

Vorzugsweise weist die Runge in ihrem Fußbereich unterhalb einer für das Hindurchtreten des Befestigungsglieds vorgesehenen Aussparung in ihrem Korpus einen Quersteg auf, der bei verriegelter Runge hinter eine nach unten vorspringende Nase des Befestigungsglieds angehoben wird und damit eine Sicherung in Richtung weg von der Ladefläche definiert, während der Rahmen der Ladefläche einen Anschlag für den Fußbereich der Runge definiert. Ferner sind vorzugsweise von dem Quersteg emporstehende Streben vorgesehen, die im verriegelten Zustand der Runge so weit angehoben sind, dass sie hinter ein seitlich überstehendes Teil des Befestigungsglieds reichen und damit die Sicherung durch den Quersteg ergänzen. Der Abstand der Streben ist vorteilhaft so bemessen, dass sie das Befestigungsglied ohne oder mit geringem Spiel umrahmen und damit auch ein Schlagen der Runge in ihrer Querrichtung parallel zu dem Quersteg verhindern. Die Streben sind dabei vorteilhaft so bemessen, dass sie bei verriegelter Runge etwas nach oben über das seitlich überstehende Teil des Befestigungsglieds vorstehen. Vorzugsweise ist vorgesehen, dass die Streben dann ferner das Stützelement seitlich abstützen, wenn dieses so dick ausgebildet ist, dass es zwischen die in der Runge in einem hinteren Bereich angeordneten Streben reicht. Alternativ kann vorgesehen werden, dass das Stützelement nicht bis in den Bereich der Streben reicht, sondern nur auf einem vorderen Abschnitt des Befestigungsglieds aufliegt.

Vorzugsweise wird die Aussparung im Fussbereich der Runge von dem Gegenlager begrenzt, so dass das Stützelement klein und damit mit geringem Gewicht ausgebildet werden kann.

Die erfindungsgemäße Runge kann vorteilhaft durch ihre Ausbildung mit einem doppel-C Profil, das über die Länge der Runge nicht unterbrochen ist und vorzugsweise im Fußbereich im Bereich der zentralen Aussparung Verstärkungen aufweist besonders gut vertikale Kräfte übertragen. Der geschlossene, nicht unterbrochene Rahmen im unteren Rungenteil ermöglicht daher eine hohe Belastung der Runge. Ferner definiert die Runge wenigstens in dem zentralen Abschnitt zwischen den beiden C-förmigen Auskragungen eine der Ladung zugekehrte Rückwand, in der auf einfache Weise mit Lochungen oder dgl. mit geringem Aufwand Aufnahmen für zum Beispiel einen zweiten horizontalen Boden zur mehrgeschossigen Beladung mit schlecht stapelbaren Gütern oder Befestigungsmittel für Ladeguttrennungen oder Ladegutsicherungen oder Gurte. Die gute Übertragung der Kräfte der erfindungsgemäßen Runge ermöglicht dies ohne vorzeitigen Ausfall der Runge und ohne dass hierfür gesonderte Tragmittel vorzusehen sind.

Eine erfindungsgemäße Rungenanordnung bzw. ein erfindungsgemäßer Planenaufbau zeichnen sich durch eine erfindungsgemäße Runge aus.

Weitere Vorteile und Merkmale der Erfindung ergeben sich aus der nachfolgenden Beschreibung sowie aus den abhängigen Ansprüchen.

Die Erfindung wird nachstehend anhand eines bevorzugten Ausführungsbeispiels einer erfindungsgemäßen Runge unter Bezugnahme auf die anliegenden Zeichnungen näher erläutert.
- Fig. 1: zeigt eine schematische Seitenansicht eines als Sattelauflieger ausgebildeten Schiebeverdecks mit gestrichelt eingezeichneten erfindungsgemäßen Rungen.
- Fig. 2: zeigt eine perspektivische Ansicht einer erfindungsgemäßen Runge vor dem Festlegen an der Ladepritsche.
- Fig. 3: zeigt den unteren Bereich der Runge aus Fig. 2 vor dem Festlegen an der Ladepritsche und das an der Ladepritsche angeordnete Befestigungsglied.
- Fig.4: zeigt den unteren Bereich der Runge aus Fig. 2 beim Verriegeln an der Ladepritsche.
- Fig. 5: zeigt den unteren Bereich der Runge aus Fig. 2 im verriegelten Zustand.
- Fig. 6: zeigt den oberen Bereich der Runge aus Fig. 2.
- Fig. 7: zeigt eine teilweise geschnittene Seitenansicht des unteren Bereichs der Runge gemäß Fig. 3.
- Fig. 8: zeigt eine teilweise geschnittene Seitenansicht des unteren Bereichs der Runge gemäß Fig. 4.
- Fig. 9: zeigt eine teilweise geschnittenen Seitenansicht des unteren Bereichs der Runge gemäß Fig. 5.
- Fig. 10: zeigt eine Draufsicht auf den unteren Bereich der Runge aus Fig. 2 im verriegelten Zustand.
- Fig. 11: zeigt einen Längsschnitt durch den unteren Bereich der Runge aus Fig. 2 im verriegelten Zustand.
- Fig. 12: zeigt eine Ansicht von unten auf den unteren Bereich der Runge aus Fig. 2 im unverriegelten Zustand.
- Fig. 13: zeigt eine perspektivische Ansicht der Rückseite des unteren Bereichs der Runge aus Fig. 2.

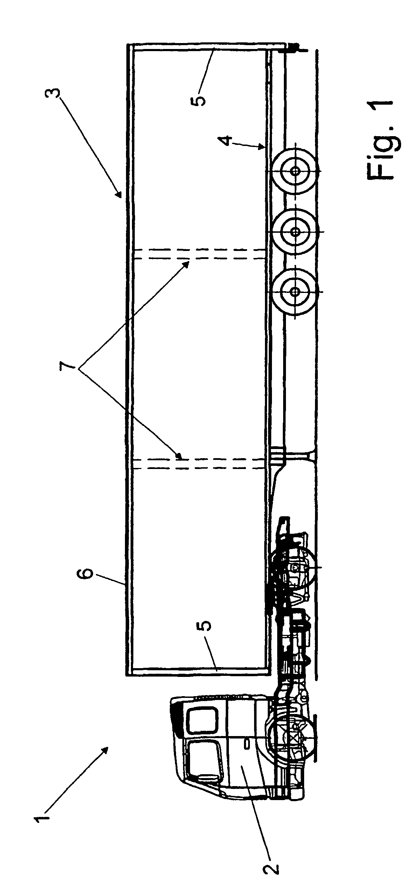

Der in Fig. 1 schematisch dargestellte Sattelzug 1 besteht aus einer Zugmaschine 2 und einem Sattelauflieger 3. Der Sattelauflieger 3 ist als Schiebeverdeck ausgebildet, bei dem eine Ladefläche 4 in den Ecken angeordnete vertikale Posten 5 aufweist, die horizontale, in Fahrtrichtung verlaufende Längsträger 6 und in der Seitenansicht nicht sichtbare Querträger abstützen, wobei zwischen den beiden Pfosten 5 zwei Rungen 7 angeordnet sind, die die Ladefläche 4 mit den Längsträgern 6 verbinden und diese vertikal abstützen. Seitenplanen hängen von den Längsträgern 6 seitlich herab, und eine Dachplane ist zwischen den beiden Längsträgern 6 verschiebbar angeordnet. Um die Belastbarkeit der Ladepritsche zu verbessern ist bei Gestellen von Schiebeverdecken, wie es in Fig. 1 dargestellt ist, in der Regel wenigstens die Runge 7 derart ausgebildet, dass sie aus ihrer Verankerung gelöst werden kann, manchmal sind auch die Längsträger 6 und die Pfosten 5 lösbar.

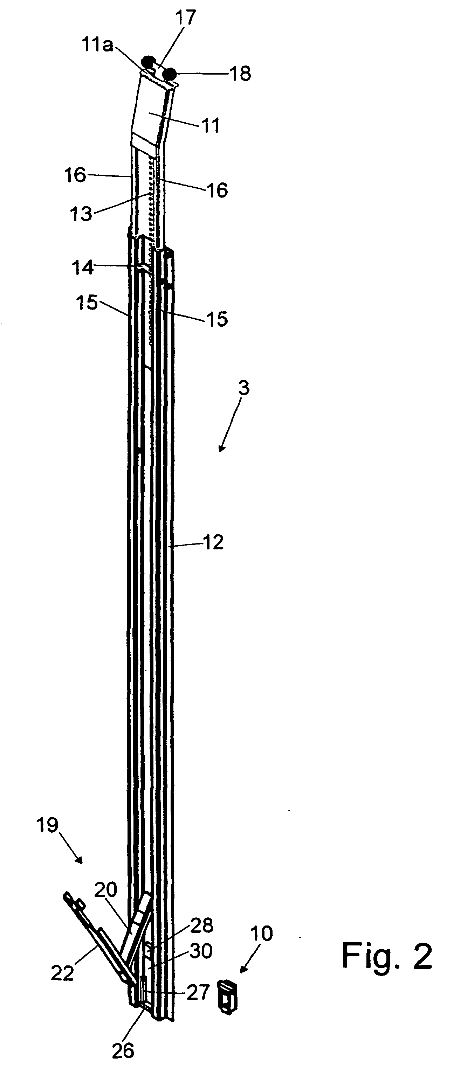

Insbesondere bei den Rungen 7 ist ein schnelles Spannen und Verriegeln beziehungsweise Lösen erwünscht. In Fig. 2 ist die perspektivische Ansicht eines bevorzugten Ausführungsbeispiels einer Rungenanordnung mit einer erfindungsgemäßen Runge 7 und eines Befestigungsglieds 10, vorliegend als Rungenschuh ausgebildet, das aussen an der Ladefläche 4 des Schiebeverdecks 3 festgelegt, beispielsweise festgeschraubt ist, dargestellt.

Das Befestigungsglied 10 besteht aus einem U-förmig gebogenen Metallteil 10a und einem T-förmigen Metallteil 10b, wobei in dem vertikal verlaufenden Abschnitt des T-förmigen Metallteils 10b und in der Basis des U-förmigen Metallteils 10a miteinander ausgefluchtete Bohrungen 10c ausgebildet sind, durch die Befestigungsbolzen hindurch geführt werden können, um das Befestigungsglied 10 im Bereich der Ladefläche 4 festzulegen. Der mit den Bohrungen 10c versehenen Abschnitt des T-förmigen Metallteils 10b weist einen Abstand zu der Basis des U-förmigen Metallteils 10a auf, füllt aber den Abstand zwischen den beiden Schenkeln des U-förmigen Metallteils 10a und verhindert, dass diese sich bei Belastung verbiegen. Der sich horizontal erstreckende Kopf 10e des T-förmigen Metallteils 10b ist als Vierkant-Vollmaterial ausgestaltet und in Ausnehmungen der Ecken der Schenkel des U-förmigen Metallteils 10a eingesetzt und überragt beidseitig die Schenkel des U-förmigen Metallteils 10a. Nach oben schließen die beiden Metallteile 10a, 10b bündig ab und definieren eine horizontale Auflagefläche, während der vertikale Abschnitt de T-förmigen Metallteils 10b nach unten über das U-förmige Metallteil 10a übersteht und eine Nase 10d definiert. Gemeinsam bilden die Metallteile 10a und 10b ein stabiles und torsionsfestes Befestigungsglied 10, das Kräfte in alle Richtungen gut übertragen kann. Insbesondere die auf den Kopf 10e wirkenden vertikalen Kräfte werden über beide Metallteile 10a, 10b in den (nicht dargestellten) Rahmen der Ladefläche 4 des Schiebeverdecks 3 abgeleitet.

Die Runge 7 besteht aus einem oberen Rungenteil 11 und einem unteren Rungenteil 12, die derart ausgeformt sind, dass sie relativ zueinander verschiebbar und damit die Rungen 7 bei der Fertigung in der Höhe variabel sind. Das obere Rungenteil 11 weist eine Lochung 13 auf, in die ein Riegelbolzen 14 des unteren Rungenteils 12 eingreift und damit die Höhe der Runge 7 festlegt. Durch die Lochung 13 und den Riegelbolzen 14 ist es möglich, aus standardisiertem, oberem Rungenteil 11 und unterem Rungenteil 12 Rungen 7 unterschiedlicher Höhen herzustellen, ohne dass hierfür jeweils andere Teile benötigt werden.

Das untere Rungenteil 12 weist im Bereich seiner Verbindung mit dem oberen Rungenteil 11 eine flache Gestalt auf, die zwei rechteckige Auskragungen 15 aufweist, in die jeweils entsprechende Erhebungen 16 des oberen Rungenteils 11 eingreifen. Hierdurch ist eine gute Kräfte- und Momentenübertragung des unteren Rungenteils 12 auf das obere Rungenteil 11 gewährleistet. Im Bereich der Verbindung der beiden Rungenteile 11, 12 ist die Rückseite der Auskragungen 15 mit einer Abdeckplatte 12a, die an dem unteren Rungenteil 12 festgeschraubt ist, verschlossen.

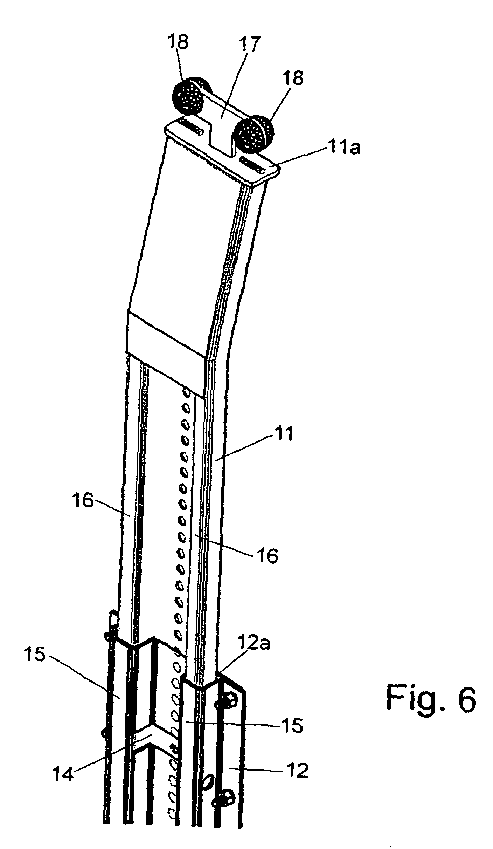

Wie in Fig. 6 in größeren Einzelheiten zu erkennen, weist das obere Rungenteil 11 in seinem oberen Abschnitt einen T-förmigen Fortsatz 17 auf, in dessen Enden zwei Doppelrollen 18 gelagert sind, die in eine Laufbahn des Längsträgers 6 eingreifen. Damit kann bei entriegelter Runge 7 durch das Rollen der Rollen 18 diese entlang des Längsträgers 6 verschoben werden. Ein Stützbereich 11a des oberen Rungenteils 11 ist als flache horizontale Auflage ausgebildet und dazu bestimmt, nach dem Anheben der Runge 7 in Anlage gegen eine untere Flachseite des zugehörigen Längsträgers 6 zu gelangen, wodurch bei verriegelter Runge 7 die Rollen 18 entlastet sind und ferner einer möglicherweise vorhandene Durchbiegung des Längsträgers 6 entgegengewirkt wird.

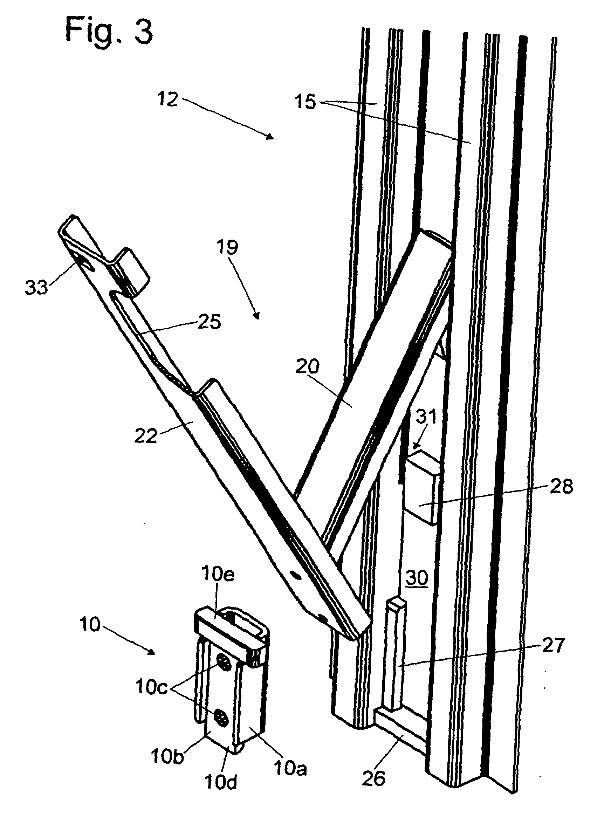

Um eine wirksame vertikale Abstützung der Längsträger 6 zu erreichen ist es erforderlich, dass die Runge 7 mit ihrem unteren Bereich an dem Befestigungsglied 10 derart angehoben und verriegelt wird, dass die Kräfte günstig vertikal in die Runge 7 eingeleitet werden und auch seitliches oder vertikales Spiel vermieden wird. Hierzu weist die Runge 3, wie in Fig. 3 genauer zu erkennen, eine Kniehebelanordnung 19 auf, mit einem Zwischenhebel 20 und einem Haupthebel 22. Der Zwischenhebel 20 ist einerseits an dem unteren Rungenteil zwischen den beiden rechteckigen Auskragungen 15 im Bereich einer Befestigungseinheit 21a in einem Gelenk 21 und mit anderen Ende an dem Haupthebel 22 über ein Gelenk 23 gelagert, wobei der kurze Hebelarm 22a des Haupthebels 22 endseitig ein Klauenteil 24 aufweist, und der lange Hebel 22b des Haupthebels 22 eine Handgriffausnehmung 25 an seinem dem Gelenk 23 abgewandten Ende aufweist. Das Klauenteil 24 ist an einem massiven Stützelement 29 festgelegt.

In ihrem unteren Bereich weist die Runge 3 an ihrem unteren Rungenteil 12 einen Quersteg 26 auf, der den Bereich zwischen den beiden Auskragungen 15 miteinander verbindet und zugleich gegenüber den Stirnseiten der Auskragungen 15 zurückspringt. Zugleich begrenzt der Quersteg 26 eine Aussparung 30 in dem Fußbereich des unteren Rungenteils 12 nach unten. Die Aussparung ist so bemessen, dass die Runge 7 dort über das Befestiungsglied 10 geschoben werden kann. Vertikal und im Bereich der Auskragungen 15 sind weiterhin beiderseits des Querstegs 26 aufragende Streben 27 angeordnet, die gegenüber dem Steg 26 ein weiteres Stück zurückspringen.

Oberhalb der Aussparung 30 ist ein Gegenlager 28 in der Gestalt eines Blocks aus Metall, der zentrisch zwischen den beiden Auskragungen 15 an dem unteren Rungenteil 12 angeschweißt oder in anderer geeigneter Weise befestigt ist. Das Gegenlager 28 ist etwa so breit wie das Stützelement 29 oder das Befestigungsglied 10. Zwischen dem Gegenlager 28 und den Auskragungen 15 ist jeweils ein Spalt 31 vorgesehen. Der Abstand zwischen Quersteg 26 und Gegenlager 28 entspricht in etwa der gemeinsamen Höhe von Stützelements 29 und Befestigungsglied 10.

Das Stützelement 29 ist durch Verschweißen oder vorzugsweise durch Verschrauben fest mit dem Haupthebel 22 verbunden. Zugleich ist in dem Stützelement 28 auch das Lager des Gelenks 23 vorgesehen. Alternativ könnte die Anlenkung mit dem Gelenk 23 auch an einem weiteren Teil des Haupthebels 22 vorgesehen sein, das außerhalb des Stützelements 29 angeordnet ist, beispielsweise in einem Bereich (bei verriegelter Runge 7) oberhalb des Gegenlagers 28. Das Stützelement 29 weist der Oberseite des Befestigungsglied 10 bzw. der Unterseite des Gegenlagers 28 zugekehrte Begrenzungsflächen auf, die diesen in ihrer Form angepaßt sind, vorliegend also flache Begrenzungsflächen. Es ist möglich, die dem unteren Rungenteil 12 zugekehrten Ecken des Stützelements 29 abzurunden. Zur Befestigung des Klauenteils 24 ist das Stützelement 29 etwas weniger dick als die zur Verfügung stehende Tiefe der Aussparung 30 ausgestaltet.

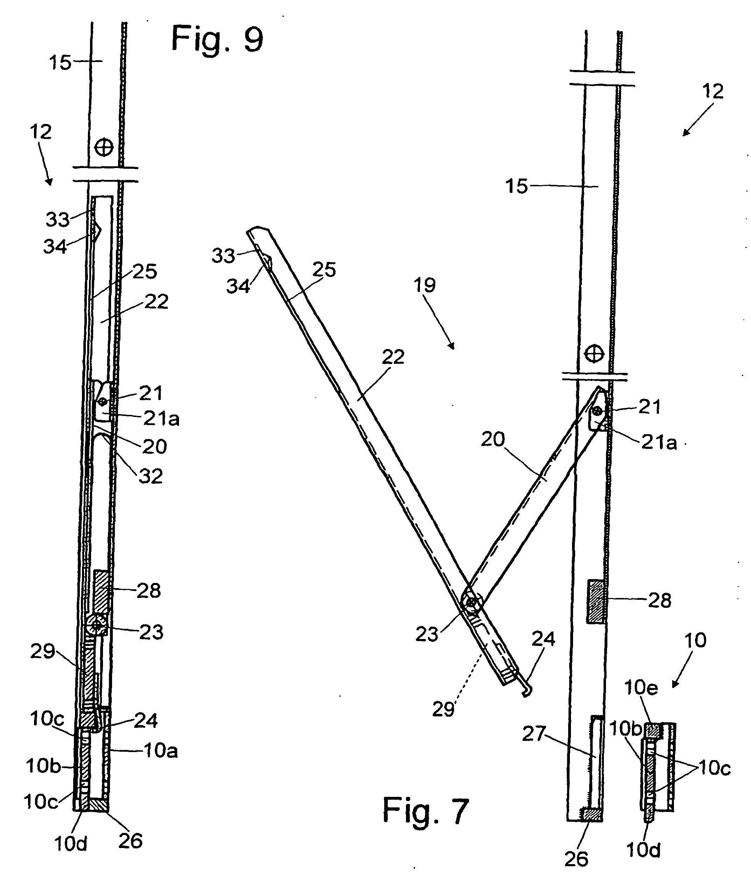

Ausgehend von einer geöffneten Stellung der Runge 7, wie in Fig. 3 und Fig. 7 dargestellt, ist das Klauenteil 24 dazu bestimmt, hinter den Kopf 10e des T-förmigen Metallteils 10b zu greifen und mit seiner endseitigen Abbiegung zunächst den Haupthebel 22 in dem Befestigungsglied 10 zu verhaken.

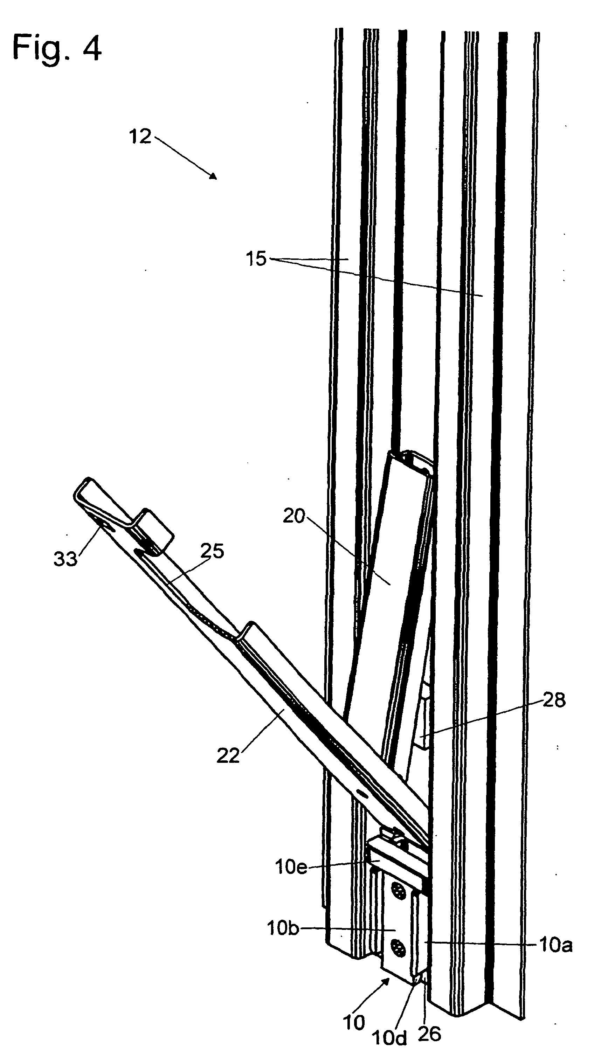

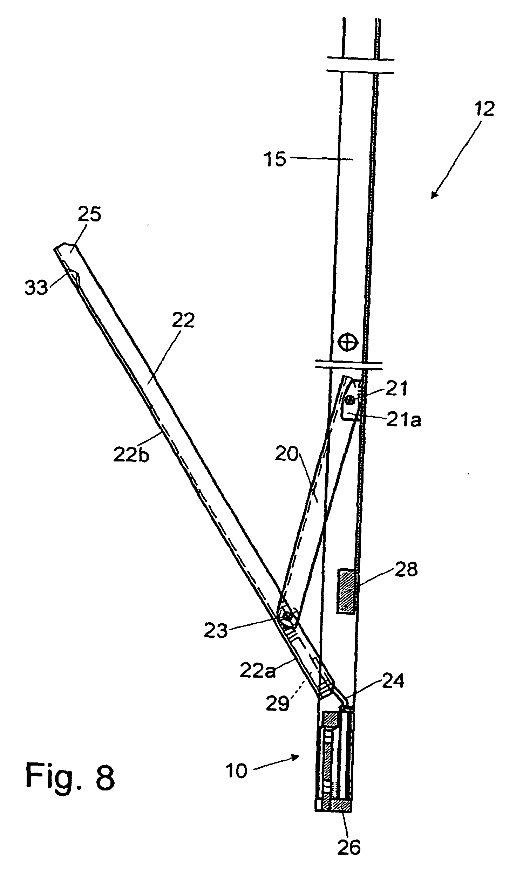

Zum Einhängen der Runge 7 wird, soweit noch nicht geschehen, der Wagen 17 in dem Längsträger 6 eingehangen und die Aussparung 30 der Runge 7 über das Befestigungsglied 10 hinübergeführt derart, dass der Quersteg 26 sich hinter und unter der nach unten vorstehenden Nase 10d des T-förmigen Metallteils 10b befindet und die Streben 27 das U-förmige Metallteil 10a seitlich umrahmen. Hierzu wird ggf. die Kniehebelanordnung 19 angehoben beziehungsweise nach oben verschwenkt. Dies kann von Hand geschehen, in dem vorliegenden Ausführungsbeispiel ist hierzu eine Blattfeder 32 vorgesehen, die an dem Zwischenhebel 22 und an dem unteren Rungenteil 12 festgelegt ist und diese auseinander spreizt. Das Klauenteil 24 wird in den oberen Schlitz des Befestigungsglieds 10, der von den Teilen 10a, 10b umschlossen wird, eingeführt, wie dies in Fig. 4 und Fig. 8 dargestellt ist. Aufgrund der Kniehebelanordnung 19 wird dann durch Drücken des Haupthebels 22, beispielsweise im Bereich der Griffeinheit 25, in Richtung auf den Korpus des unteren Rungenteils 12 die Runge 7 angehoben. Die Kräfte für das Anheben der Runge 7 werden während der Betätigung der Hebelanordnung 19 über die beiden Gelenke 21, 23 von dem Befestigungsglied 10 auf die Runge 7 und über die Runge 7 auf den Längsträger 6 übertragen.

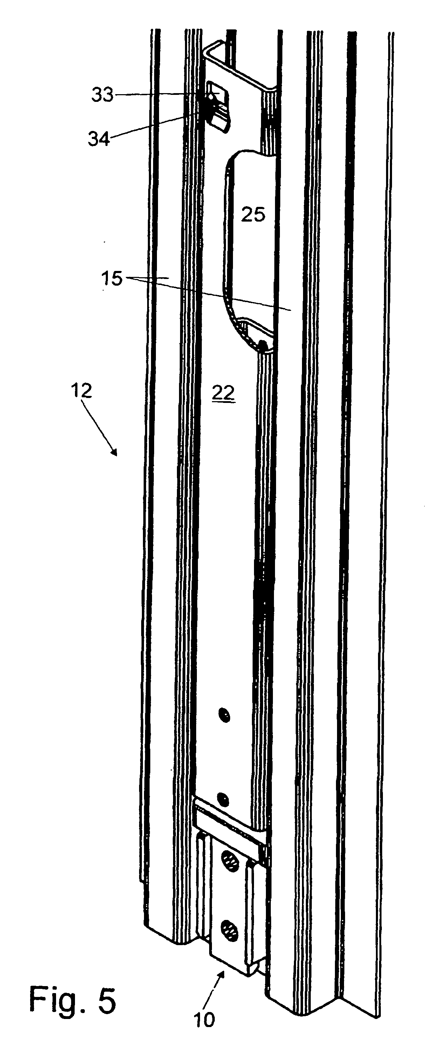

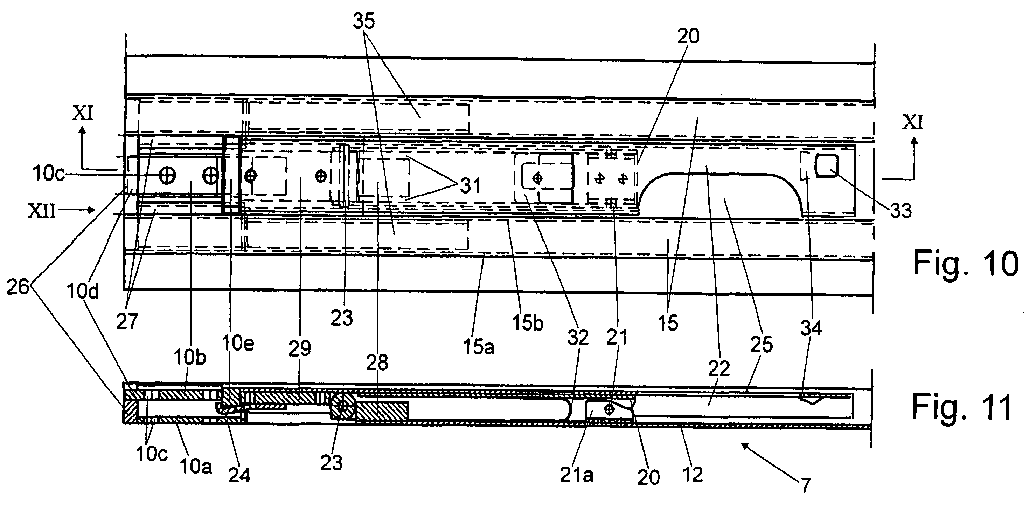

Durch das Vordrücken des Haupthebels 22 wird der Haupthebel 22 und der Zwischenhebel 20 zwischen den beiden Auskragungen 15 des unteren Rungenteils 12 zur Anlage gebracht. Die in ihrem Querschnitt U-förmigen Hebel 20, 22 sind in dieser, in Fig. 5 und 9 anschaulich dargestellten verriegelten Position einander übergreifend und mit ihrer Basis im wesenlichen parallel zu der Erstreckung der Runge 7 eingeklappt, während die schmalen randseitigen Schenkel der Hebel 20, 22 zueinander benachbart zwischen den beiden Auskragungen 15 liegen und im Bereich des Gegenlagers 28 in den Spalt 31 eindringen. Hierbei sind die Aussenseite des Haupthebels 22 und die Auskragungen 15 im wesentlichen ausgefluchtet, wodurch eine ästhetische glatte Oberfläche definiert wird, vgl. Fig. 5 und 9.

Mit dem Einschwenken der Hebelanordnung 19 und dem Anheben der Runge 7 (und ggf. des Längsträgers 6 über den Stützbereich 11a) wird auch das Stützelement 29 zwischen das Befestigungsglied 10 und das Gegenlager 28 gedrückt. Sobald das Stützelement 29 mit dem Befestigungsglied 10 und dem Gegenlager 28 in Berührung steht, werden die Kräfte von dem Befestigungsglied 10 nicht mehr im Wesentlichen über die Hebel 20, 22 und die zugehörigen Gelenke 23, 21, sondern über das Stützelement 29 übertragen. Die Gelenke 21, 23 sind somit im verriegelten Zustand der Runge 7 quasi frei von Belastungen, so dass bei geschlossener Kniehebelanordnung 19 eine Einleitung der vertikalen Kräfte über den Kopf 10e des T-förmigen Teils 10b, das Stützelement 29 in das Gegenlager 28 und damit in die Runge 7 erfolgt. Die Hebelanordnung 19 dient somit vornehmlich zum Anheben und Absenken der Runge 7, während das vertikale Fixieren der Runge 7 durch das Stützelement 29 erfolgt.

Man erkennt, dass das Stützelement 29 einstückig ausgebildet ist und einen etwas schmaleren unteren Abschnitt und einen etwas breiteren oberen Abschnitt aufweist, wobei der obere Abschnitt zugleich ein Lager für das Gelenk 23 aufweist. Es ist möglich, das Gelenk 23 auch an anderer Stelle vorzusehen und das Stützelement 29 als ein Teil gleichförmiger Stärke auszubilden. Ebenso ist es möglich, die beiden Abschnitte als benachbarte Teile eines mehrteiligen Stützelements auszugestalten, wodurch die Fertigung grosser Stückzahlen wirtschaftlicher wird, selbst wenn sich hierdurch die Toleranzen des Stützelements vergrössern. Durch die grössere Breite des oberen Abschnitts des Stützelements wird eine gute für die zuverlässige Abstützung der Runge 7 vorteilhafte Überdeckung mit dem Gegenlager 28 erzielt.

Zugleich ist aufgrund der angehobenen Runge 7 der Quersteg 26 hinter die Nase 10d des Befestigungsglieds 10 angeordnet, so dass auch bei einer Belastung der Runge 7 aufgrund einer von der Ladefläche 4 nach außen wirkenden Kraft eine formschlüssige Verriegelung gegeben ist. Ferner sind auch die Streben 27 angehoben, so dass diese mit ihrem oberen Bereich hinter den Kopf 10e des T-förmigen Metallteils 10b gelangen und ebenfalls eine formschlüssige Verriegelung gegen das selbsttätige Öffnen der Runge 7 bewirken. Zugleich verhindern die Streben 27 ein seitliches Spiel der Runge 7 gegenüber dem Befestigungsglied 10.

Der Haupthebel 22 weist in der Endpartie seines langen Hebelarms 22b eine in etwa rechteckige Ausstanzung 33 auf, an die sich ein abgesenkter Bereich 34 anschliesst. Bei eingeschwenktem Haupthebel 22 übergreift eine (nicht dargestellte) Schnappeinrichtung den abgesenkten Bereich 34 und hält den Haupthebel 22 lösbar an dem unteren Rungenteil 12. Durch die Schnappeinrichtung ist sichergestellt, dass es nicht zu einem unbeabsichtigten Betätigen der Hebelanordnung 19 kommt. Die Schnappeinrichtung weist einen Löseknopf auf, der zum Freigeben der Verriegelung nach oben verschoben werden kann. Die Ausstanzung 33 ist hierbei vorteilhaft so in der Nähe der Griffausnehmung 25 angeordnet, dass der Daumen einer Bedienperson den Lösenknopf betätigen kann, während die Hand die Griffausnehmung 25 durchgreift. Da die Hebelanordnung 19 im verriegelten Zustand der Runge 7 kraftfrei ist, kann die Schnappeinrichtung zur Aufnahme geringer Kräfte ausgelegt werden, so dass die einhändige Bedienung der Hebelanordnung 19 möglich ist.

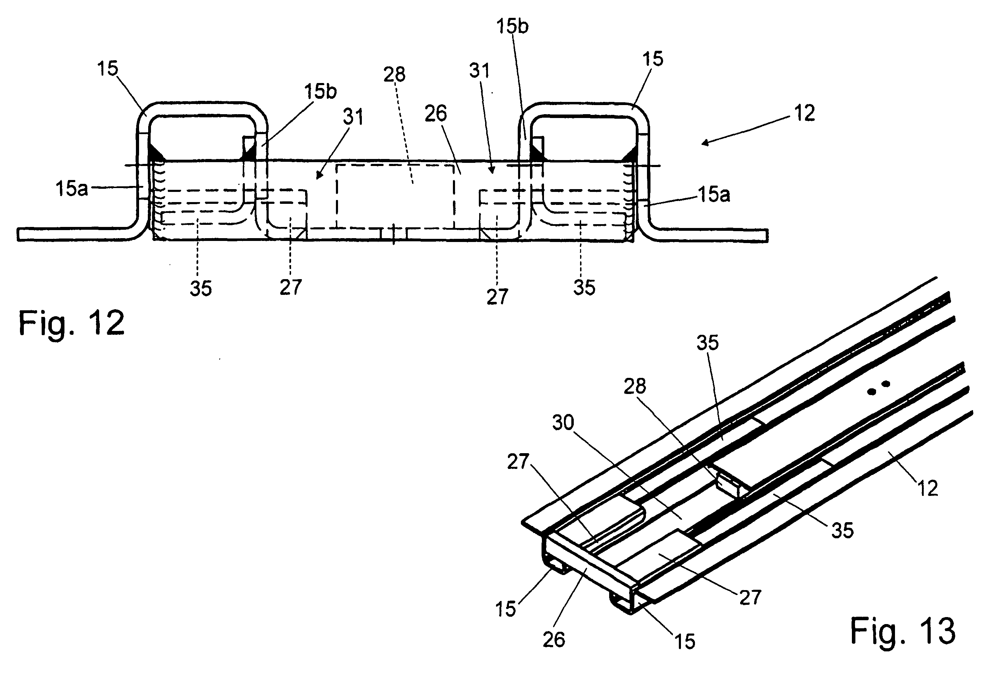

In Fig. 12 und 13 erkennt man, dass der Fußbereich des unteren Rungenteils 12 der Runge 7 zumindest in einem Bereich, der die Aussparung 30 umgibt, zusätzlich verstärkt ist, obwohl die ein Profil in Gestalt eines Doppel-C definierenden Auskragungen 15 bereits bis an das untere Ende des unteren Rungenteils 12 ununterbrochen fortgesetzt sind und damit eine günstige Übertragung von vertikalen Kräften ermöglicht. Man erkennt, dass der Quersteg 26 und die Streben 27 als gemeinsame Gruppe ausgebildet sind, entweder durch Verschweissung oder als gemeinsames Gußteil, und in den Fußbereich der Runge 7 eingeschweisst sind. Hierbei erreicht der Quersteg 26 eine Dicke, die mehr als die Hälfte der Tiefe der Auskragungen 15 ausmacht. Ferner sind die Streben 27 die Auskragungen 15 durchsetzend ausgebildet, so daß die an der Innenseite der jeweils äußeren Wandung 15a jeder Auskragung 15 und festgeschweißt sind. Auch der Quersteg 26 ist an den Wandungen 15a festgeschweißt. Hierdurch wird dem Fußbereich der Runge 7 eine erhöhte Stabilität verliehen, die die Schwächung aufgrund der zentralen Aussparung 30 wenigstens ausgleicht und überdies insbesondere die Übertragung von in Fahrtrichtung wirkenden Kräften von der Runge 7 auf das Befestigungsglied 10 ermöglicht.

Ferner sind in den Auskragungen 15 an der Innenseite von deren inneren Wandungen 15b Winkelprofile 35 eingeschweißt, die bis in den Bereich des Gegenlagers 28 reichen und dadurch die Auskragungen 15 zusätzlich versteifen. Der Ende des freien Schenkels des Winkelprofils 35 ist dabei in einem kurzen Anstand zu der Innenseite der äußeren Wandungen 15a der Auskragungen 15 angeordnet. Es ist möglich, diesen Abstand aufzuheben und die Rückseite der Auskragungen 15 ganz zu verschließen. Die Winkelprofile 35 können überdies mit den Streben 27 verschweißt sein. Insbesondere kann eine Baugruppe aus Quersteg 26, Streben 27 und Winkelprofilen 35, ggf. sogar mit dem Gegenlager 28, aus einem Stück gefertigt sein und in den Fußbereich der Runge 7 eingeschweißt werden.

Die Erfindung funktioniert nun wie folgt:

Zum Verriegeln einer Runge 7 an einem Befestigungsglied 10 wird diese zunächst über die Rollen 18 in die richtige Position verfahren und dann die Ausnehmung 30 der Runge 7 über das Befestigungsglied 10 geschwenkt. Dann wird der Haupthebel 22 mit dem Klauenteil 24 in den Schlitz zwischen den beiden Metallteilen 10a, 10b eingeführt, und der Haupthebel 22 in Richtung auf die Runge 7 verschwenkt, wodurch der Zwischenhebel 20 und insbesondere das Gelenk 21 mit der Runge 7 nach oben verlagert wird. Entsprechend vergrössert sich auch der für die Aufnahme des Stützelements 29 vorgesehene Raum zwischen ortsfestem Befestigungsglied 10 und mit der Runge 7 nach oben verlagertem Gegenlager 28, so dass das Stützelement 29 in diesen Zwischenraum eindringen kann. Die Schnappeinrichtung greift über den abgesenkten Bereich 34.

Zum Entriegeln der Runge 7 wird der Haupthebel 22 - nach Lösen der Schnappeinrichtung - und somit das daran befestigte Stützelement 29 von dem unteren Rungenteil 12 weggezogen und damit der Kraftfluss zwischen Befestigungsglied 10, Stützelement 29 und Gegenlager 28 unterbrochen, wodurch das Gewicht der Runge 7 erst auf den Hebeln 20, 22 und den Gelenken 21, 23 und nach einem weiteren Wegstück an den Rollen 18 lastet, so dass die Runge entlang des Längsträgers 6 verschoben werden kann.

Die Erfindung ist vorstehend anhand einer Runge mit einem Stützelement 28 beschrieben worden, das eine flache Unterseite für die Auflage auf die ebene obere Seite des Befestigungsglieds 10 aufweist, und bei der ein Klauenteil 24 in einen Schlitz des Befestigungsglieds 10 eindringt. Ebenso kann das Stützelement eine zur Kontur der oberen Seite des Befestigungsglieds 10 komplementäre Stufe aufweisen, beispielsweise wenn das Befestigungsglied 10 eine zu der Nase 10d vergleichbare nach oben vorspringe Nase aufweist, wobei durch die Stufung in dem entsprechenden, z.B. als Stemmglied ausgebildeten Stützelement ebenfalls der Haupthebel günstig angesetzt werden kann.

Ebenso ist es möglich, die Sicherung der Runge gegen diese von der Ladefläche nach aussen drückende Kräfte dadurch zu unterstützen oder die vorstehend beschriebene Sicherung mit dem Quersteg 26 und/oder den Streben 27 zu ersetzen durch eine Anordnung, bei der ein separat einsteckbarer Sicherungskeil in einer V-förmigen Fangtasche gehalten wird und so eine Bewegung der Runge nach aussen blockiert.

## Patentansprüche

1. Runge für einen Planenaufbau, die an einem Befestigungsglied (10) verriegelbar ist, umfassend eine zum Anheben und Verriegeln der Runge vorgesehene Hebelanordnung (19),
**dadurch gekennzeichnet,**
**dass** die Runge ein Gegenlager (28) aufweist, und
**dass** ein Stützelement (29) vorgesehen ist, das zwischen Befestigungsglied (10) und Gegenlager (28) einsetzbar ist,
so dass bei verriegelter Runge Gelenke (21, 23) der Hebelanordnung (19) keine vertikalen Kräfte übertragen.

2. Runge nach Anspruch 1, **dadurch gekennzeichnet, dass** das Stützelement (29) eine untere Begrenzung, die formschlüssig an das Befestigungsglied (10) angepasst ist, und eine obere Begrenzung, die formschlüssig an das Gegenlager (28) angepasst ist, aufweist.

3. Runge nach Anspruch 1 oder 2, **dadurch gekennzeichnet, dass** das Stützelement (29) an einem Teil der Runge befestigt ist.

4. Runge nach Anspruch 1 oder 2, **dadurch gekennzeichnet, dass** das Stützelement an dem Befestigungsglied (10) befestigt ist.

5. Runge nach Anspruch 1 oder 2, **dadurch gekennzeichnet, dass** das Stützelement ein zu Runge und Befestigungsglied (10) zusätzliches Teil ist.

6. Runge nach einem der Ansprüche 1 bis 3, **dadurch gekennzeichnet, dass** das Stützelement (29) an der Hebelanordnung (19) angeordnet ist.

7. Runge nach Anspruch 6, **dadurch gekennzeichnet, dass** die Hebelanordnung (19) einen Haupthebel (22), an dem das Stützelement (29) befestigt ist, und einen Hilfshebel (20), der den Haupthebel (22) und den Korpus der Runge verbindet, aufweist.

8. Runge nach Anspruch 7, **dadurch gekennzeichnet, dass** der Zwischenhebel (20) und der Haupthebel (22) im Wesentlichen als U-förmige, einander im verriegelten Zustand der Runge übergreifende Teile ausgebildet sind.

9. Runge nach Anspruch 8, **dadurch gekennzeichnet, dass** das Stützelement (29) und das Gegenlager (28) im verriegelten Zustand der Runge von einer Basis wenigstens eines der U-förmigen Hebel (20, 22) überdeckt werden.

10. Runge nach einem der Ansprüche 7 bis 9, **dadurch gekennzeichnet, dass** der Haupthebel (22) eine oberhalb seines Gelenks (23) für den Hilfshebel (20) angeordnete Griffausnehmung (25) aufweist.

11. Runge nach einem der Ansprüche 1 bis 10, **dadurch gekennzeichnet, dass** die Hebelanordnung (19) ein Klauenteil (24) aufweist, das mit dem Befestigungsglied (10) in Eingriff bringbar ist.

12. Runge nach einem der Ansprüche 1 bis 11, **dadurch gekennzeichnet, dass** die Runge eine unterhalb des Gegenlagers (28) ausgebildete Ausnehmung (30) aufweist, in die das Stützelement (29) einsetzbar ist.

13. Runge nach einem der Ansprüche 1 bis 12, **dadurch gekennzeichnet, dass** die Runge in ihrem Fußbereich einen Quersteg (26) aufweist, der im verriegelten Zustand eine Nase (10d) des Befestigungsglieds (10) hintergreift.

14. Runge nach einem der Ansprüche 1 bis 13, **dadurch gekennzeichnet, dass** die Runge in ihrem Fußbereich vertikal verlaufende Streben (27) aufweist, die in einem der Breite des Befestigungsglieds (10) entsprechenden Abtand zueinander vorgesehen sind.

15. Runge nach Anspruch 13 und 14, **dadurch gekennzeichnet, dass** der Quersteg (26) und die Streben (27) als gemeinsames Teil ausgebildet sind.

16. Runge nach einem der Ansprüche 1 bis 15, **dadurch gekennzeichnet, dass** das Gegenlager (28) eine Aussparung (30) der Runge nach oben hin begrenzt.

17. Runge nach einem der Ansprüche 1 bis 16, **dadurch gekennzeichnet, dass** die Runge aus einem oberen Rungenteil (11) und einem unteren Rungenteil (12), die ineinander greifen, zusammengesetzt ist.

18. Runge nach Anspruch 17, **dadurch gekennzeichnet, dass** das untere Rungenteil (12) ein Profil mit in der Längsrichtung der Runge verlaufenden Auskragungen (15), die ein Rechteckprofil aufweisen, aufweist.

19. Runge nach einem der Ansprüche 1 bis 18, **dadurch gekennzeichnet, dass** eine Abstützfläche (11a) vorgesehen ist, die bei angehobener Runge in Kontakt mit einem Längsträger (6) gelangt, und dass oberhalb der Abstützfläche (11a) ein mit Rollen (18) versehener Fortsatz (17) vorsteht.

20. Runge nach einem der Ansprüche 1 bis 19, **dadurch gekennzeichnet, dass** das Gegenlager (28) als fest mit dem Korpus der Runge verbundener Metallkörper ausgebildet ist.

21. Rungenanordnung, umfassend ein Befestigungsglied (10) und eine hiervon lösbare Runge (7) nach einem der Ansprüche 1 bis 20.

22. Verdeckgestell für eine von einem Planenaufbau überbaute Ladefläche (4), mit oberhalb von Kanten der Ladefläche (4) verlaufenden Längsträgern (6),
**gekennzeichnet**
**durch** eine Rungenanordnung nach Anspruch 21, bei der das Befestigungsglied (10) im Bereich der Ladefläche (4) festgelegt ist und die Runge (6) in ihrem Fußbereich an dem Befestigungsglied (10) verriegelt ist und mit einer oberen Abstützfläche (11a) gegen den entsprechenden Längsträger (6) abgestützt ist.

23. Verdeckgestell nach Anspruch 22, **dadurch gekennzeichnet, dass** der Planenaufbau als Schiebeverdeck (3) ausgebildet ist.

## Claims

1. A stanchion for a tarpaulin structure which can be locked on a fixing member (10), comprising a lever arrangement (19) provided for raising and locking the stanchion,
**characterized in**
**that** the stanchion comprises a counterbearing (28), and
**that** a supporting element (29) which can be inserted between the fixing member (10) and counterbearing (28) is provided,
such that when the stanchion is locked, the joints (21, 23) of the lever arrangement (19) do not transmit any vertical forces.

2. The stanchion as claimed in claim 1, **characterized in that** the supporting element (29) comprises a lower boundary, which is matched in a form-fitting manner to the fixing member (10), and an upper boundary, which is matched in a form-fitting manner to the counterbearing (28).

3. The stanchion as claimed in claim 1 or 2, **characterized in that** the supporting element (29) is fixed on a part of the stanchion.

4. The stanchion as claimed in claim 1 or 2, **characterized in that** the supporting element is fixed on the fixing member (10).

5. The stanchion as claimed in claim 1 or 2, **characterized in that** the supporting element is an additional part to the stanchion and fixing member (10).

6. The stanchion as claimed in one of claims 1 to 3, **characterized in that** the supporting element (29) is arranged on the lever arrangement (19).

7. The stanchion as claimed in claim 6, **characterized in that** the lever arrangement (19) comprises a main lever (22), on which the supporting element (29) is fixed, and an auxiliary lever (20) which connects the main lever (22) and the body of the stanchion.

8. The stanchion as claimed in claim 7, **characterized in that** the intermediate lever (20) and the main lever (22) are designed essentially as U-shaped parts which engage one over the other in the locked state of the stanchion.

9. The stanchion as claimed in claim 8, **characterized in that** the supporting element (29) and the counterbearing (28) are covered by a base of at least one of the U-shaped levers (20, 22) in the locked state of the stanchion.

10. The stanchion as claimed in one of claims 7 to 9, **characterized in that** the main lever (22) has a handle recess (25) arranged above its joint (23) for the auxiliary lever (20).

11. The stanchion as claimed in one of claims 1 to 10, **characterized in that** the lever arrangement (19) comprises a claw part (24) which can be brought into engagement with the fixing member (10).

12. The stanchion as claimed in one of claims 1 to 10, **characterized in that** the stanchion comprises a cutout (30) provided below the counterbearing (28), in which the supporting element (29) can be inserted.

13. The stanchion as claimed in one of claims 1 to 12, **characterized in that** the stanchion has in its foot region a transverse web (26) which, in the locked state, reaches behind a lug (10d) of the fixing member (10).

14. The stanchion as claimed in one of claims 1 to 13, **characterized in that** the stanchion has in its foot region struts (27) which run vertically and are provided at a distance from each other that corresponds to the width of the fixing member (10).

15. The stanchion as claimed in claim 13 and 14, **characterized in that** the transverse web (26) and the struts (27) are designed as a common part.

16. The stanchion as claimed in one of claims 1 to 15, **characterized in that** the counterbearing (28) upwardly bounds a cutout (30) of the stanchion.

17. The stanchion as claimed in one of claims 1 to 16, **characterized in that** the stanchion is composed of an upper stanchion part (11) and a lower stanchion part (12) which grip in each other.

18. The stanchion as claimed in claim 17, **characterized in that** the lower stanchion part (12) has a profile with projections (15) which run in the longitudinal direction of the stanchion and have a rectangular profile.

19. The stanchion as claimed in one of claims 1 to 18, **characterized in that** a supporting surface (11a) is provided, which surface, when the stanchion is raised, comes into contact with a longitudinal support (6), and **in that** an extension (17) provided with rollers (18) protrudes above the supporting surface (11a).

20. The stanchion as claimed in one of claims 1 to 19, **characterized in that** the counterbearing (28) is designed as a metal body which is connected fixedly to the body of the stanchion.

21. A stanchion arrangement, comprising a fixing member (10) and a stanchion (7), which can be released therefrom, as claimed in one of claims 1 to 20.

22. A tarpaulin frame for a loading area (4) built over by a tarpaulin structure, having longitudinal supports (6) which run above edges of the loading area (4),
**characterized**
**by** a stanchion arrangement as claimed in claim 21, in which the fixing member (10) is secured in the region of the loading area (4) and the stanchion (6) is locked in its foot region on the fixing member (10) and is supported against the corresponding longitudinal support (6) by means of an upper supporting surface (11a).

23. The tarpaulin frame as claimed in claim 22, **characterized in that** the tarpaulin structure is designed as a sliding tarpaulin (3).

## Revendications

1. Montant pour une structure à bâche qui peut être verrouillé à un élément de fixation (10), ledit montant comportant un dispositif à levier (19) destiné à lever et verrouiller le montant, **caractérisé en ce que** le montant comporte une butée (28), et **en ce qu'**un élément de support (29) est prévu, lequel peut être inséré entre l'élément de fixation (10) et la butée (28),
de sorte que lorsque le montant est verrouillé, des articulations (21, 23) du dispositif à levier (19) ne transmettent aucune force verticale.

2. Montant selon la revendication 1, **caractérisé en ce que** l'élément de support (29) comporte une butée de limitation inférieure qui est adaptée par complémentarité de forme à l'élément de fixation (10) et une butée de limitation supérieure qui est adaptée par complémentarité de forme à la butée (28).

3. Montant selon la revendication 1 ou 2, **caractérisé en ce que** l'élément de support (29) est fixé à une partie du montant.

4. Montant selon la revendication 1 ou 2, **caractérisé en ce que** l'élément de support est fixé à l'élément de fixation (10).

5. Montant selon la revendication 1 ou 2, **caractérisé en ce que** l'élément de support est une partie complémentaire du montant et de l'élément de fixation (10).

6. Montant selon l'une des revendications 1 à 3, **caractérisé en ce que** l'élément de support (29) est placé sur le dispositif à levier (19).

7. Montant selon la revendication 6, **caractérisé en ce que** le dispositif à levier (19) comporte un levier principal (22), auquel est fixé l'élément de support (29), et un levier auxiliaire (20) qui relie le levier principal (22) et le corps du montant.

8. Montant selon la revendication 7, **caractérisé en ce que** le levier intermédiaire (20) et le levier principal (22) sont conformés sensiblement en pièces en forme de U s'engageant l'une dans l'autre lorsque le montant est à l'état verrouillé.

9. Montant selon la revendication 8, **caractérisé en ce que** l'élément de support (29) et la butée (28) sont recouverts par une base d'au moins un des leviers en forme de U (20, 22) lorsque le montant est à l'état verrouillé.

10. Montant selon l'une des revendications 7 à 9, **caractérisé en ce que** le levier principal (22) comporte un évidement de préhension (25) ménagé au-dessus de son articulation (23) pour le levier auxiliaire (20).

11. Montant selon l'une des revendications 1 à 10, **caractérisé en ce que** le dispositif à levier (19) comporte une partie en forme de griffe (24) qui peut être amenée en engagement avec l'élément de fixation (10).

12. Montant selon l'une des revendications 1 à 11, **caractérisé en ce que** le montant comporte un évidement (30) qui est ménagé au-dessous de la butée (28) dans lequel l'élément de support (29) peut être inséré.

13. Montant selon l'une des revendications 1 à 12, **caractérisé en ce que** le montant comporte au niveau de son pied une entretoise (26) qui s'engage, à l'état verrouillé, derrière un taquet (10d) de l'élément de fixation (10).

14. Montant selon l'une des revendications 1 à 13, **caractérisé en ce que** le montant comporte au niveau de son pied des contrefiches (27) s'étendant verticalement, qui sont espacées l'une de l'autre d'une distance correspondant à la largeur de l'élément de fixation (10).

15. Montant selon la revendication 13 et 14, **caractérisé en ce que** l'entretoise (26) et les contrefiches (27) sont conformées en une partie commune.

16. Montant selon l'une des revendications 1 à 15, **caractérisé en ce que** la butée (28) limite vers le haut un évidement (30) du montant.

17. Montant selon l'une des revendications 1 à 16, **caractérisé en ce que** le montant est constitué d'une partie de montant supérieure (11) et d'une partie de montant inférieure (12) qui s'engagent l'une dans l'autre.

18. Montant selon la revendication 17, **caractérisé en ce que** la partie de montant inférieure (12) présente un profil doté de saillies (15) qui s'étendent dans la direction longitudinale du montant et qui présentent un profil rectangulaire.

19. Montant selon l'une des revendications 1 à 18, **caractérisé en ce qu'**une surface d'appui (11a) est prévue qui vient en contact avec un support longitudinal (6) lorsque le montant est soulevé et **en ce qu'**un prolongement (17), doté de galets (18), fait saillie au-dessus de la surface d'appui (11a).

20. Montant selon l'une des revendications 1 à 19, **caractérisé en ce que** la butée (28) est conformée en corps métallique de liaison fixé au corps du montant.

21. Dispositif à montant, comportant un élément de fixation (10) et un montant (7) selon l'une des revendications 1 à 20, amovible par rapport à l'élément de fixation.

22. Bâti de capote pour surface de chargement (4) recouverte d'une structure à bâche, lequel bâti de capote comporte des longerons (6) s'étendant au-dessus des bords de la surface de chargement (4),
**caractérisé par** un dispositif à montant selon la revendication 21 dans lequel l'élément de fixation (10) est fixé au niveau de la surface chargement (4) et le montant (6) est verrouillé au niveau de son pied à l'élément de fixation (10) et appuie au niveau d'une surface d'appui supérieure (11a) contre les longerons correspondants (6).

23. Bâti de capote selon la revendication 22, **caractérisé en ce que** la structure à bâche est conformée en capote coulissante.
